# EUROPEAN PATENT SPECIFICATION

(11) **EP 3 071 028 B1**
(45) Date of publication and mention of the grant of the patent: **17.06.2020**
(21) Application number: 14828515.8
(22) Date of filing: 20.11.2014
(51) Int. Cl.: A01N 1/02

(54) **KIT FOR EX-VIVO CONDITIONING AND PURIFICATION OF AN EXPLANTED ORGAN**
KIT ZUR EX-VIVO-KONDITIONIERUNG UND REINIGUNG EINES EXPLANTIERTEN ORGANS
KIT POUR LE CONDITIONNEMENT ET LA PURIFICATION EX-VIVO D'ORGANES EXPLANTÉS

(30) Priority: 20.11.2013 IT TO20130944
(43) Date of publication of application: 28.09.2016
(60) Divisional application: 20158886.0
(73) Proprietor: Aferetica S.r.l., 40138 Bologna (IT)
(72) Inventor: RIMONDI, Stefano, 40129 Bologna (IT)
(74) Representative: Casciano, Lidia Giulia Rita
(86) International application number: PCT/IB2014/066205
(87) International publication number: WO 2015/075669

(56) References cited:
- WO-A1-96/30111
- WO-A1-2007/111495
- KAKISHITA T ET AL: "Suppression of Inflammatory Cytokines During Ex Vivo Lung Perfusion With an Adsorbent Membrane", THE ANNALS OF THORACIC SURGERY, ELSEVIER, UNITED STATES, vol. 89, no. 6, 1 June 2010 (2010-06-01), pages 1773-1779, XP027071187, ISSN: 0003-4975, DOI: 10.1016/J.ATHORACSUR.2010.02.077 [retrieved on 2010-05-20]
- MORGAN V DILEO ET AL: "Experimental Validation of a Theoretical Model of Cytokine Capture Using a Hemoadsorption Device", ANNALS OF BIOMEDICAL ENGINEERING, KLUWER ACADEMIC PUBLISHERS-PLENUM PUBLISHERS, NE, vol. 37, no. 11, 14 August 2009 (2009-08-14), pages 2310-2316, XP019745516, ISSN: 1573-9686, DOI: 10.1007/S10439-009-9780-4
- KUTSUKI ET AL: "beta2-Microglobulin-selective direct hemoperfusion column for the treatment of dialysis-related amyloidosis", BIOCHIMICA ET BIOPHYSICA ACTA (BBA) - PROTEINS & PROTEOMICS, ELSEVIER, NETHERLANDS, vol. 1753, no. 1, 10 November 2005 (2005-11-10), pages 141-145, XP027627816, ISSN: 1570-9639 [retrieved on 2005-11-10]
- BELLOMO RINALDO ET AL: "Coupled plasma filtration adsorption", INTENSIVE CARE MEDICINE, BERLIN, DE, vol. 29, no. 8, 1 August 2003 (2003-08-01) , pages 1222-1228, XP008119173, ISSN: 0342-4642, DOI: 10.1007/S00134-003-1796-X [retrieved on 2004-02-19]
- MARIUS A. ROMAN ET AL: "Ex Vivo Lung Perfusion: A Comprehensive Review of the Development and Exploration of Future Trends", TRANSPLANTATION, vol. 96, no. 6, 1 September 2013 (2013-09-01), pages 509-518, XP055114965, ISSN: 0041-1337, DOI: 10.1097/TP.0b013e318295eeb7
- MIRAL R SADARIA ET AL: "Cytokine Expression Profile in Human Lungs Undergoing Normothermic Ex-Vivo Lung Perfusion", THE ANNALS OF THORACIC SURGERY, ELSEVIER, UNITED STATES, vol. 92, no. 2, 6 April 2011 (2011-04-06), pages 478-484, XP028247913, ISSN: 0003-4975, DOI: 10.1016/J.ATHORACSUR.2011.04.027 [retrieved on 2011-04-18]

## Description

### TECHNICAL FIELD

The present invention concerns a kit for conditioning and purification of explanted organs.

### BACKGROUND ART

Despite the ongoing progress in medical treatment, the request for donor organs is always higher than their availability, due to the long waiting times. Furthermore, the percentage of organs explanted which are suitable for reimplantation can be fairly low, as in the case of lungs, in which only 20% of the lungs explanted from donors are considered suitable for transplantation. Other organs, such as the heart, liver, kidneys and pancreas, are more suitable for transplantation, however all of them, once explanted, are subject to a mechanism of deterioration which can invalidate the probability of success of the subsequent reimplant.

The damage to the organs occurs at different times, for example in the period preceding cerebral death or cardiac arrest of the potential donor, during explantation of the organ itself, during its conservation and transport or in the period preceding the reimplant operation.

The presence in the organ of inflammatory cytokines, cell elements, portions of cells and reperfusion injury, i.e. injury to an organ when the blood supply returns to the organ after a period of ischemia or in general after a lack of oxygen, are some of the main factors that cause dysfunction of the organ once transplanted and failure of the transplant itself.

The cytokines and mediators play a key role in many of the processes involved in the deterioration of an organ, such as further activation of the cytokine cascade, promotion of apoptosis, increase in leukocyte adhesion and activation of inducible nitric oxide synthase. All these inflammatory processes can play a very important role in the organ deterioration which has been observed, including oedema and microcirculatory damage.

In the case of lung transplant, the transplant is sometimes performed using the lungs of a donor after ex vivo lung perfusion (EVLP). The lungs explanted and subject to said process are healthy but temporarily deteriorated in functional terms as a result of the metabolic events connected with cerebral death (for example oedema, production of endobronchial secretions), making them unsuitable for transplantation. The technique of ex vivo lung perfusion consists essentially in cleansing of the lungs and bronchi, removing excess water in the lung tissue, and aspirating the secretions inside the bronchi. At the end of this treatment, the function of the organs can be assessed and it is therefore possible to decide whether they are suitable for transplantation.

Various devices for ex vivo perfusion of a donor organ are known on the market.

Vivoline® LS1 is an EVLP device consisting of two parts; the first part, called evaluation unit, consists of a roller pump, a heater/cooler unit and a gas circulation system. It also comprises means for setting the maximum pressure and the value of the gas flow and its temperature.

The second part, called lung chamber, consists of a container for the organ, an oxygenator, connection hoses and a leukocyte filter.

Another device for EVLP is XVIVO Organ Chamber consisting of a set of lung cannulae, one arterial and one venous, a reservoir, a heat exchanger, an oxygenator membrane, and a centrifugal pump.

Other devices for EVLP are described in M. A. Roman et al., "Ex Vivo Lung Perfusion: A Comprehensive Review of the Development and Exploration of Future Trends", Transplantation, Vol. 96, No. 6, p. 509-518, WO9630111 and WO2007111495.

Disadvantageously, said equipment does not allow elimination of cell waste, cell elements and inflammatory substances that may be present in the explanted organ and therefore flow into the perfusion liquid.

The article by T. Kakishita et al., "Suppression of Inflammatory Cytokines During Ex Vivo Lung Perfusion With an Adsorbent Membrane", The Annals of Thoracic Surgery, Vol. 89, No. 6, 2010, p. 1773-1779, discloses an ex vivo lung perfusion circuit comprising connection means to and from the lung, fluid connection means, and separation means comprising an adsorbent membrane for removing perfusate proinflammatory cytokines and a leukocyte filter.

### DISCLOSURE OF INVENTION

The object of the present invention is therefore to provide an improved device for ex vivo conditioning and purifying of organs. In particular, the object of the present invention is to provide a device for ex vivo conditioning and purifying of organs capable of eliminating from the organ cell waste, cell elements and inflammatory substances which can cause dysfunction of the same and failure of the transplant.

Said object is achieved by the present invention, which concerns a kit for ex vivo conditioning and purifying of explanted organs according to claim 1. Preferred embodiments are defined in the dependent claims.

In particular, the present invention concerns a kit for ex vivo conditioning and purifying of an explanted organ comprising:
- connections from and to said organ;
- fluid connection means;
- a separation means comprising at least one fractionation filter and an absorption cartridge (5), in which said fractionation filter has a cut-off ranging from 80,000 to 800,000 Da and is located upstream of said absorption cartridge. The kit further comprises a plasma filter with a pore diameter from 0.2 to 0.6 micron, said plasma filter being positioned upstream of said fractionation filter and said absorption cartridge.

Advantageously, the presence of said separation means purifies and conditions the organ before reimplantation thereof in the recipient.

The kit is intended for use with a perfusion liquid, for example a commercial perfusion liquid, blood or plasma which, by circulating through the explanted organ and then through the kit of the invention, cleanses the same, eliminating cytokines, inflammation mediators, cell fragments, cell elements (entire cells), for example leukocytes, platelets and coagulation factors like ultra-large Von Willebrand factors.

The term "fractionation filter" indicates a hollow fibre filter having a cut-off ranging from 80,000 to 800,000 Da, made for example of a material like polysulfone (PS), polyethersulfone (PES), polymethylmethacrylate (PMMA), polyether-polyamide (PEPA), ethylene vinyl alcohol (EVAL) copolymer. The surface area generally ranges from 0.8 to 2.4 m². Said fractionation filter allows the retention of cell fragments and elements, coagulation products (thrombi), coagulation products and ultra-large von Willebrand factors, i.e. with a molecular weight above 20,000 Dalton.

The term "cut-off" indicates the molecular weight for which the sieving coefficient of the membrane (ratio between quantity filtered and quantity contained in the fluid entering the filter) is below 5%.

In an embodiment not forming part of the present invention, the fractionation filter can alternatively be a high permeability filter, i.e. with a cut-off ranging from 45,000 to 80,000 Da.

Said fractionation filter allows discrimination of the compounds present in the perfusion liquid on the basis of the dimensions by means of physical exclusion, retaining the larger particles and allowing the cytokines to pass through.

The term "absorption cartridge" indicates an absorption cartridge produced by inserting in a rigid or semi-rigid housing a synthetic resin, preferably hydrophobic, for example an agarose resin, a styrene-divinylbenzene copolymer resin, an acrylic resin containing at least one functional group selected from the group consisting of carboxylic group, thiol group and aldehyde group. Said resins can also be modified to contain affinity ligands such as antibodies, glycoproteins, fusion proteins or peptides to promote the specific bond of cytokines or inflammatory molecules on the resin. The diameter of the resin beads in the absorption cartridge, modified if necessary with affinity ligands, ranges from 100 to 600 micron.

The term "pore dimension" indicates the dimension which allows the passage of cytokines and is twice as large as the length of the cytokines in its three-dimensional configuration. In general, the dimension of the pores ranges from 50 to 500 Angstrom.

The absorption cartridge allows retention of the inflammatory substances such as the interleukin 1 beta (IL1β), the interleukin 6 (IL6), the interleukin 17 (IL17), the interleukin 33 (IL33), the tumour necrosis factor alpha (TNFα), the receptor ST2, the angiopoietin-2 (Ang2), the vascular endothelial growth factor (VEGF), the macrophage migration inhibitory factor (MIF), the metalloproteinases MM3, MM9 and MM12, and the ligands correlated with the family of the B-cell lymphomas of the gene-2 (Bcl-2).

The term "plasma filter" indicates a hollow fibre filter made of a material such as polyethylene, cellulose acetate, polypropylene, polysulfone or polymethacrylate. The pore diameter of said plasma filter ranges from 0.2 to 0.6 micron. The surface area generally ranges from 0.2 to 0.8 m². The plasma filter allows the retention of cell fragments and elements.

The term "haemofilter" indicates a filter with cut-off below 60,000 Dalton.

The term "leukocyte filter" indicates an element able to retain leukocytes. The sorbent material can consist of hydrophilic or hydrophobic polysulfone, cellulose acetate, polyethylene terephthalate, polyarylate and polyesters in general.

Said leukocyte filter allows the retention of leukocytes, microaggregates and platelets.

The organ and the separation means are joined to form a circuit via fluid connection means. These are made of biocompatible materials, in order to avoid undesired phenomena such as activation of the coagulation factors, for example they are ducts made of polyvinyl chloride (PVC).

In particular, the organ is connected to the fluid connection means via connection means, for example cannulae, which allow transport of the perfusion liquid from and to the organ.

### BRIEF DESCRIPTION OF THE DRAWINGS

Non-limiting embodiments of the present invention will now be described with reference to the accompanying drawings, in which:
- Figure 1 illustrates schematically a kit for conditioning and purifying explanted organs according to a first embodiment useful for understanding the invention;
- Figure 2 illustrates schematically an alternative kit for conditioning and purifying explanted organs according to a second embodiment of the invention.

### BEST MODE FOR CARRYING OUT THE INVENTION

According to a first embodiment that is useful for understanding the invention, a kit is provided for ex-vivo conditioning and purifying an explanted organ comprising an absorption cartridge 5 and a fractionation filter 4 upstream of the absorption cartridge 5 with reference to the circulation direction of the perfusion liquid established by the pump.

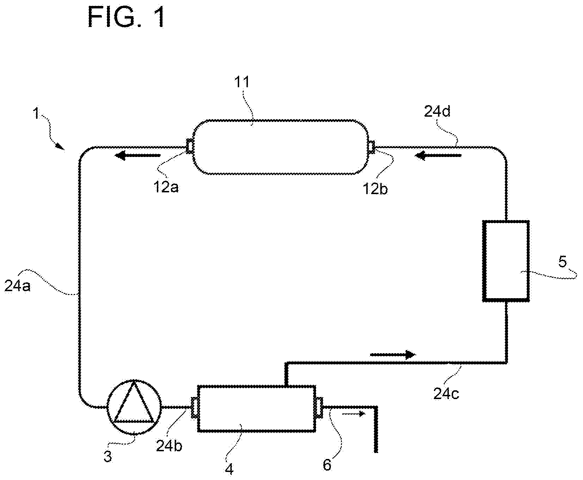

With reference to Figure 1, a first example of embodiment of the kit 1 according to the first embodiment is shown.

The kit 1 is adapted to be connected by means of cannulae 12 to the organ which, after explantation, is placed inside a housing chamber 11. The cannulae 12 are in turn connected to a system of ducts 21 to form a circuit which allows circulation of the perfusion liquid inside the kit 1.

In particular, the cannula 12a is connected on one side to the artery of the organ and on the other side, by means of the duct 24a, to a pump 3 which has the job of maintaining the desired circulation flow of the perfusion liquid inside the circuit. Said pump can be, for example, a peristaltic pump or a centrifugal pump.

The duct 24b downstream of the pump 3 connects the outlet of the pump 3 to a fractionation filter 4. Said fractionation filter 4 is provided with a discharge 6 to allow elimination of the filtrate containing cell fragments, for example. With this filter leukocytes, cell fragments and large coagulation products are eliminated from the perfusion liquid but not cytokines and inflammation mediators.

The duct 24c connects the fractionation filter 4 to the absorption cartridge 5, inside which adsorption of the cytokines and inflammation mediators takes place.

At the outlet of the absorption cartridge 5, the duct 24d re-conveys the perfusion liquid to the organ by means of the cannula 12b.

Advantageously, the absorption cartridge 5 removes by chemical interaction the inflammatory substances with dimensions smaller than those of the pores of the fractionation filter 4 and which could therefore continue to be present in the perfusion liquid flowing out of the filter.

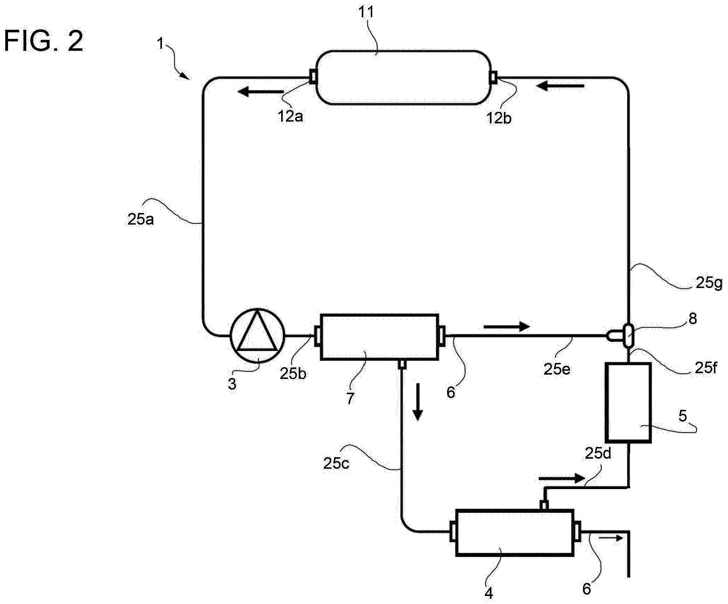

In accordance with the invention, in a second embodiment, illustrated in Figure 2, the kit 1 for conditioning and purifying an explanted organ further comprises a plasma filter 7 located upstream with respect to the fractionation filter 4. In particular, the cannula 12a is connected on one side to the artery of the organ and on the other side, via the duct 25a, to a pump 3.

A duct 25b connects the outlet of the pump 3 to a plasma filter 7. The plasma filter 7 separates the corpuscled part originally present in the perfusion liquid or which may have been extracted from the organ undergoing conditioning after cleansing. In particular the plasma filter 7 divides the perfusion liquid into two fractions: a first fraction without corpuscled part and a second fraction rich in the corpuscled part. The first fraction without the corpuscled part is conveyed via the duct 25c to the fractionation filter 4 and from here via the duct 25d to the absorption cartridge 5.

From here the perfusion fluid is conveyed to the connecting point 8 via the duct 25f.

The second fraction rich in corpuscled part flowing out of the plasma filter 7 is conveyed via the duct 25e directly to the connecting point 8. In the connecting point 8 the first fraction and the second fraction are re-united and conveyed to the organ via the duct 25g and the cannula 12b.

Advantageously, the presence of the plasma filter 7 upstream of the fractionation filter 4 allows separation of the corpuscled component present in the perfusion liquid avoiding obstruction of the fractionation filter 4.

The kit 1 according to the invention can further comprise a leukocyte filter which can be positioned upstream of the pump or immediately before the return to the organ, i.e. immediately before the cannula 12b.

Advantageously, the presence of the leukocyte filter allows removal of any leukocytes present in the perfusion liquid.

## Claims

1. A kit (1) for ex vivo conditioning and purification of an explanted organ, comprising:
- connection means to and from said organ (12);
- fluid connection means (2);
- one separation means comprising at least a fractionation filter (4) and an absorption cartridge (5), wherein said fractionation filter (4) has a cut-off in the range from 80,000 to 800,000 Da and is positioned upstream of said absorption cartridge (5); and
- a plasma filter (7) with a pore diameter from 0.2 to 0.6 micron, said plasma filter (7) being positioned upstream of said fractionation filter (4) and said absorption cartridge (5).

2. A kit according to claim 1, **characterized in that** said fractionation filter (4) is a filter made of a material selected from the group consisting of polysulfone, polyethersulfone, polymethylmethacrylate, polyether polyamide, ethylene vinyl alcohol copolymer.

3. A kit according to claim 1, **characterized in that** said absorption cartridge (5) has a diameter of the resin beads in the range from 100 to 600 micron.

4. A kit according to claim 3, **characterized in that** said absorption cartridge (5) comprises at least one hydrophobic synthetic resin selected from the group consisting of an agarose resin, a styrene-divinylbenzene copolymer resin and an acrylic resin containing at least one functional group selected from the group consisting of carboxylic group, thiol group and aldehyde group.

5. A kit according to claim 1, **characterized in that** said plasma filter (7) is a filter made of a material selected from the group consisting of polyethylene, cellulose acetate, polypropylene, polysulfone and polymethacrylate.

6. A kit according to any one of the preceding claims, further comprising a pump (3).

7. A kit according to claim 6, **characterized in that** said pump (3) is positioned upstream of said separation means.

## Patentansprüche

1. Ausrüstung (1) zur *Ex*-*vivo*-Aufbereitung und -Reinigung eines entnommenen Organs, umfassend:
- Verbindungsmittel zu und von dem Organ (12);
- Fluidverbindungsmittel (2);
- ein Trennmittel, das zumindest ein Fraktionierungsfilter (4) und eine Absorptionskartusche (5) umfasst, wobei das Fraktionierungsfilter (4) einen Testtrennwert im Bereich von 80.000 bis 800.000 Da aufweist und stromaufwärts der Absorptionskartusche (5) angeordnet ist; und
- ein Plasmafilter (7) mit einem Porendurchmesser von 0,2 bis 0,6 Mikrometern, wobei das Plasmafilter (7) stromaufwärts des Fraktionierungsfilters (4) und der Absorptionskartusche (5) angeordnet ist.

2. Ausrüstung nach Anspruch 1, **dadurch gekennzeichnet, dass** es sich bei dem Fraktionierungsfilter (4) um ein Filter handelt, das aus einem Material besteht, welches aus der aus Polysulfon, Polyethersulfon, Polymethylmethacrylat, Polyetherpolyamid, Ethylen-Vinylalkohol-Copolymer bestehenden Gruppe ausgewählt ist.

3. Ausrüstung nach Anspruch 1, **dadurch gekennzeichnet, dass** die Absorptionskartusche (5) einen Durchmesser der Harzperlen im Bereich von 100 bis 600 Mikrometern aufweist.

4. Ausrüstung nach Anspruch 3, **dadurch gekennzeichnet, dass** die Absorptionskartusche (5) zumindest ein hydrophobes synthetisches Harz umfasst, das aus der Gruppe ausgewählt ist, bestehend aus einem Agaroseharz, einem Styrol-Divinylbenzol-Copolymer-Harz und einem Acrylharz, enthaltend wenigstens eine funktionelle Gruppe, die aus der aus Carboxygruppe, Thiolgruppe and Aldehydgruppe bestehenden Gruppe ausgewählt ist.

5. Ausrüstung nach Anspruch 1, **dadurch gekennzeichnet, dass** es sich bei dem Plasmafilter (7) um ein Filter handelt, das aus einem Material besteht, welches aus der aus Polyethylen, Celluloseacetat, Polypropylen, Polysulfon und Polymethacrylat bestehenden Gruppe ausgewählt ist.

6. Ausrüstung nach einem der vorhergehenden Ansprüche, weiter umfassend eine Pumpe (3).

7. Ausrüstung nach Anspruch 6, **dadurch gekennzeichnet, dass** die Pumpe (3) stromaufwärts des Trennmittels angeordnet ist.

## Revendications

1. Kit (1) pour le conditionnement et la purification *ex vivo* d'un organe explanté, comprenant :
- un moyen de raccordement vers et depuis ledit organe (12) ;
- un moyen de raccordement de fluide (2) ;
- un moyen de séparation comprenant au moins un filtre de fractionnement (4) et une cartouche d'absorption (5), où ledit filtre de fractionnement (4) a un seuil de coupure dans la plage de 80 000 à 800 000 Da et est positionné en amont de ladite cartouche d'absorption (5) ; et
- un filtre à plasma (7) ayant un diamètre de pore de 0,2 à 0,6 micron, ledit filtre à plasma (7) étant positionné en amont dudit filtre de fractionnement (4) et de ladite cartouche d'absorption (5).

2. Kit selon la revendication 1, **caractérisé en ce que** ledit filtre de fractionnement (4) est un filtre constitué d'un matériau choisi dans le groupe constitué des polysulfone, polyéthersulfone, poly(méthacrylate de méthyle), polyéther-polyamide, copolymère éthylène-alcool vinylique.

3. Kit selon la revendication 1, **caractérisé en ce que** ladite cartouche d'absorption (5) a un diamètre des billes de résine dans la plage de 100 à 600 microns.

4. Kit selon la revendication 3, **caractérisé en ce que** ladite cartouche d'absorption (5) comprend au moins une résine synthétique hydrophobe choisie dans le groupe constitué d'une résine d'agarose, d'une résine de copolymère styrène-divinylbenzène et d'une résine acrylique contenant au moins un groupe fonctionnel choisi dans le groupe constitué d'un groupe carboxylique, d'un groupe thiol et d'un groupe aldéhyde.

5. Kit selon la revendication 1, **caractérisé en ce que** ledit filtre à plasma (7) est un filtre constitué d'un matériau choisi dans le groupe constitué du polyéthylène, de l'acétate de cellulose, du polypropylène, de la polysulfone et du polyméthacrylate.

6. Kit selon l'une quelconque des revendications précédentes, comprenant en outre une pompe (3).

7. Kit selon la revendication 6, **caractérisé en ce que** ladite pompe (3) est positionnée en amont dudit moyen de séparation.
